# EUROPÄISCHE PATENTSCHRIFT

(11) **EP 0 530 673 B1**
(45) Veröffentlichungstag und Bekanntmachung des Hinweises auf die Patenterteilung: **30.11.1994**
(21) Anmeldenummer: 92114601.5
(22) Anmeldetag: 27.08.1992
(51) Int. Cl.: G01B 21/06, G01B 7/04

(54) **Verfahren zur Bestimmung von Überlappungslängen an aufgewickelten Materialstreifen**
Procedure to determine the doubled length of bands of material
Procédé pour déterminer la longueur en doublure de bandes de matériau

(30) Priorität: 05.09.1991 DE 4129465
(43) Veröffentlichungstag der Anmeldung: 10.03.1993
(73) Patentinhaber: Continental Aktiengesellschaft, 30165 Hannover (DE)
(72) Erfinder: Sergel, Horst, W-3000 Hannover 51 (DE); Bartsch, Friedrich, W-3057 Neustadt 1 (DE)

(56) Entgegenhaltungen:
- DE-A- 2 160 580
- IBM TECHNICAL DISCLOSURE BULLETIN, Bd. 14, Nr. 8, Januar 1972, New York, NY, USA, Seiten 2501-2502, R.L. DORR ET AL: "Document Overlap Detection"'
- INSTRUMENT PRACTICE; Bd. 23, Nr. 3, März 1969, London, GB, Seite 229: "Tyre Tread Measurement"

## Beschreibung

Die Erfindung betrifft ein Verfahren zur Messung einer Länge, insbesondere zur Bestimmung der Überlappungslänge, an einem aufgewickelten Materialstreifen, insbesondere, Kautschukstreifen, bei dem der Materialstreifen auf einer Trommel aufgewickelt wird, und eine Vorrichtung zur Durchführung des Verfahrens.

Bei der Reifenherstellung werden zur Konfektionierung eines Reifenrohlings auf einer Wickeltrommel Kautschukstreifen unterschiedlicher Art häufig mit Überlappung der Enden aufgewickelt. Im Rahmen dieser Anmeldung soll unter Kautschukstreifen nicht nur ein Materialstreifen aus reinem Kautschuk verstanden werden, sondern auch ein solcher, der aus einem gummierten Gewebe, z.B. Cordgewebe besteht. Die Konfektionierung eines Reifenrohlings beginnt mit dem Auflegen der Innenseele, die bereits mit sich überlappenden Enden auf der Wickeltrommel aufgelegt wird. Dabei beträgt die Überlappungslänge ca. 30 mm. Ebenso wird anschließend die Karkaßlage mit sich überlappenden Enden aufgelegt. Im Laufe der weiteren Reifenherstellung werden unterschiedliche Gewebestreifen und Kautschukstreifen ebenso mit einer bestimmten vorgegebenen Überlappungslänge aufgelegt.

Die Kontrolle von Überlappungslängen erfolgte bisher durch den Maschinenbediener durch unmittelbare Messung der Überlappungslänge nach dem vollständigen Auflegen eines Materialstreifens. Dabei ergibt sich jedoch das Problem, daß ein Materialstreifen, der unvulkanisierten Kautschuk enthält, plastisch verformbar ist, so daß zwar das außen auf der Wickeltrommel sichtbare Ende des Streifens genau erfaßt werden kann, jedoch nicht mehr der Anfang des Streifens, weil sich in seinem Bereich auf der Außenseite, wo die darüber gewickelten Teile des Streifens liegen, durch plastische Verformung eine Schräge bildet, so daß der Maschinenbediener nicht wissen kann, wo auf dieser Schräge er den Anfang annehmen soll. Dieses Problem erhöht sich noch, wenn der Materialstreifen in mehreren Windungen gewickelt wird.

Der Erfindung liegt deshalb die Aufgabe zugrunde, ein Meßverfahren zur exakten Bestimmung der Überlappungslänge anzugeben und eine Vorrichtung zur Durchführung des Verfahrens anzubieten.

Diese Aufgabe wird bei einem Verfahren der eingangs genannten Art dadurch gelöst, daß das vordere Ende des Materialstreifens auf der Trommel mittels eines Detektors erfaßt wird und gleichzeitig die zugehörige Winkelstellung der Trommel gemessen wird, daß nach dem Aufwickeln des Materialstreifens sein hinteres Ende von dem Detektor angezeigt und gleichzeitig die dem hinteren Ende zugeordnete Winkelstellung der Trommel gemessen wird und daß schließlich in einer Auswertungseinheit aus dem Differenzwert der Winkelstellungen der Trommel die Länge des Streifens bestimmt wird. Eine Vorrichtung zur Durchführung des Verfahrens ist dadurch gekennzeichnet, daß die Trommel eine Einrichtung zur Messung der bei der Rotation zurückgelegten Winkel aufweist, daß ein Detektor zur Erfassung von Anfang und Ende eines Materialstreifens dem Außenumfang der Trommel zugeordnet ist und daß eine Auswertungseinheit vorhanden ist, in der die Signale des Detektors und der Winkelmeßeinrichtung erfaßt und ausgewertet werden.

Die Erfindung geht von der Erkenntnis aus, daß es ungünstig ist, eine Überlappungslänge erst nach dem vollständigen Auflegen eines Materialstreifens zu messen, daß man vielmehr die Messung in zwei zeitlich unterschiedliche Teilmessungen aufgliedern sollte, wobei bei der ersten Teilmessung die exakte Position des Anfangs des Materialstreifens bestimmt wird und bei der zweiten Messung die exakte Position des Endes des Materialstreifens. Die Erfindung bietet den Vorteil, daß es sich um eine objektive Längenmessung handelt, so daß keine subjektiven Maßnahmen insbesondere Ableseungenauigkeiten des Maschinenbedieners mehr eingehen. Da die Messung maschinell und die Auswertung in einem Rechner erfolgt, ist die Erfindung in vorteilhafter Weise in einen automatischen Fertigungsprozeß integrierbar. Es kann auf einfache Weise eine laufende Kontrolle durchgeführt werden, was bei den immer enger werdenden Fertigungstoleranzen bei der Reifenherstellung von besonderer Bedeutung ist. Gemäß einer vorteilhaften Ausgestaltung der Erfindung kann eine automatische Abschaltung der Zuführvorrichtung vorgesehen sein, wenn die vorgeschriebene Überlappungslänge ein bestimmtes Toleranzmaß überschreitet. Schließlich ist die Erfindung nicht nur dort einsetzbar, wo Überlappungslängen exakt bestimmt werden müssen, sondern auch dort, wo bei einem stumpfen Aneinandersetzen der Enden eines Materialstreifens mit geraden oder schrägen Kanten sich z.B. eine Lücke zwischen den Enden ergibt, was auf einen zu kurzen Streifen hinweist. Dieses Problem ist bei dem Auflegen eines Laufstreifens zur Vervollständigung eines Reifenrohlings vorhanden. Der Laufstreifen wird an seinen Enden schräg zur Radialrichtung geschnitten, wobei diese schrägen Enden dann stumpf aneinanderstoßen sollen. Hierbei sind nur äußerst geringfügige Abweichungen von der exakten Umfangslänge zugelassen,und mit der Erfindung läßt sich auf einfache Weise eine Abweichung sowohl nach oben als auch nach unten von dem vorgeschriebenen Sollbereich feststellen.

Die vorliegende Erfindung ist selbstverständlich nicht nur bei der Reifenherstellung einsetzbar, sondern überall dort, wo es auf ein Aufwickeln eines Materialstreifens mit einer exakten Umfangslänge ankommt.

Nachfolgend wird ein Ausführungsbeispiel der Erfindung anhand einer Zeichnung näher erläutert.

Es zeigt in einer schematischen Darstellung
- Fig. 1: eine Vorrichtung mit einer Zuführvorrichtung mit aufgelegtem Materialstreifen weiterhin mit einer Trommel, die eine Winkelmeßeinrichtung aufweist sowie mit einem Detektor und einer Auswertungseinheit,
- Fig. 2: die Vorrichtung der Fig. 1 in einer Stellung zur Erfassung des vorderen Endes des Materialstreifens,
- Fig. 3: die Vorrichtung der Fig. 1 in einer Stellung zur Erfassung des hinteren Endes des Materialstreifens,
- Fig. 4: eine Vorrichtung mit einem aufgewickelten zu kurz geratenen Laufstreifen.

Vor der Erläuterung des Verfahrens soll zunächst die dafür dienende Vorrichtung beschrieben werden. Eine übliche Zuführvorrichtung 1 dient zum Zuführen eines Materialstreifens 2,z.B. eines Kautschukstreifens,zur Trommel 3. Die Trommel 3 weist eine Winkelmeßeinrichtung 4 auf, die fortlaufend den bei der Rotation zurückgelegten Winkel erfaßt. Die Winkelmeßeinrichtung 4 kann z.B. aus einem Drehimpulsgeber bestehen. Dem Außenumfang der Trommel 3 ist ein Detektor 5 zugeordnet, der Anfang und Ende eines auf der Trommel befindlichen Materialstreifens 2 erkennen kann. Der Detektor 5 kann z.B. aus einem Laser oder einem sonstigen bekannten Gerät zur optischen Erfassung bestehen. Die Winkelmeßeinrichtung 4 und der Detektor 5 sind in der Weise mit einer Auswertungseinheit 6 verbunden, daß eine Synchronmessung des Anfangs bzw. Endes des Materialstreifens 2 und des zugehörigen augenblicklichen Winkelwerts der Winkelmeßeinrichtung 4 stattfindet. In der Auswertungseinheit 6 kann außerdem die exakte Umfangslänge der Trommel 3 abgespeichert sein, so daß nicht die absolute Länge eines Materialstreifens 2 ermittelt wird, sondern unmittelbar die Überlappungslänge bzw. eine Lücke zwischen den Enden des Materialstreifens. Die Auswertungseinheit 6 sollte weiterhin eine Anzeigeeinheit enthalten z.B. in Form einer optischen Anzeige oder eines Druckers.

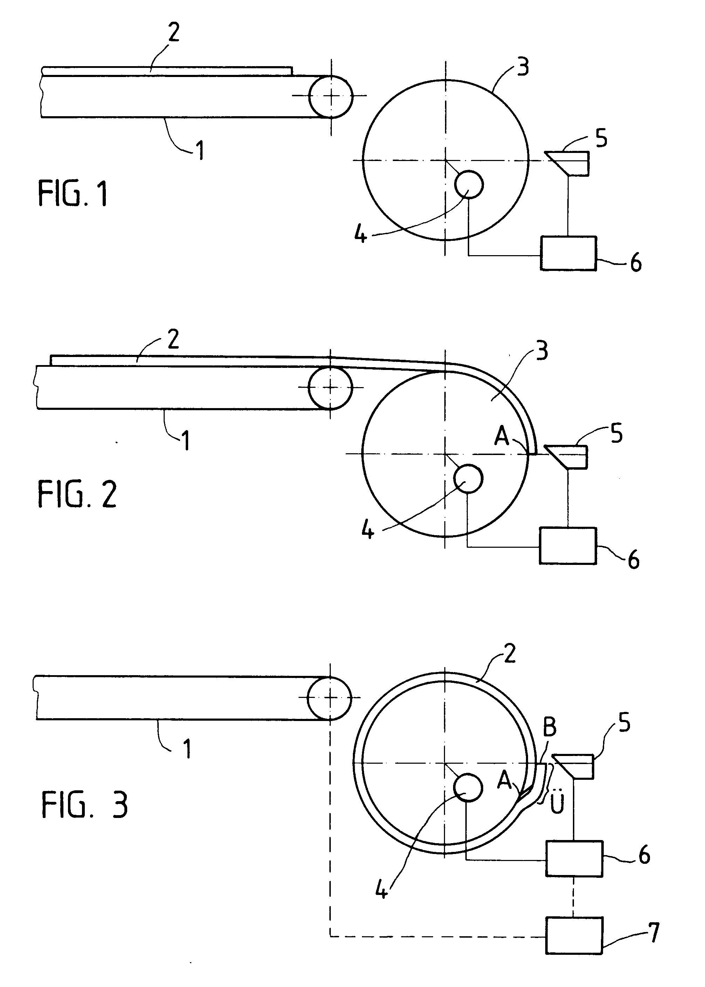

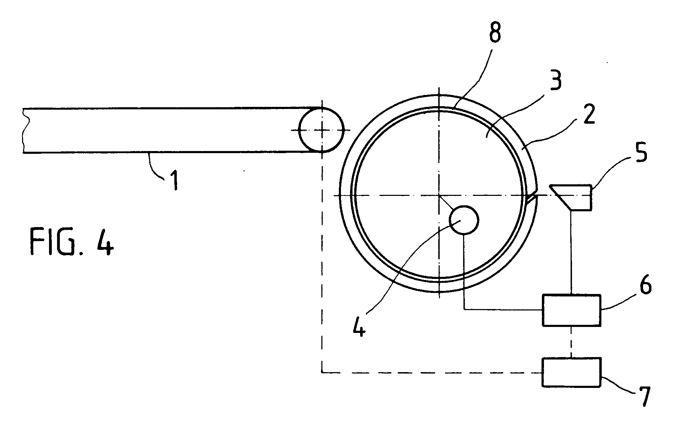

Gemäß Fig. 3 und 4 kann der Auswertungseinheit 6 eine Schaltstufe 7 nachgeschaltet sein, die bei einer Abweichung der Streifenlänge von einem Sollbereich die Zuführvorrichtung 1 automatisch abschaltet.

Nachfolgend wird das Verfahren näher erläutert. Der in Fig. 1 auf der Zuführvorrichtung 1 liegende Materialstreifen 2 wird nach dem Einschalten der Zuführvorrichtung 1 und der Trommel 3 auf der Trommel 3 aufgewickelt, wobei in der Stellung der Fig. 2 das vordere Ende A des Streifens 2 von dem Detektor 5 erfaßt wird.

Dieses Signal wie auch der zugehörige von der Winkelmeßeinrichtung 4 gemessene Winkel für die Trommel 3 werden der Auswertungseinheit 6 zugeführt. Nach dem vollständigen Aufwickeln des Streifens 2 passiert sein hinteres Ende B den Detektor 5, und es werden wiederum das entsprechende Signal im Detektor wie die zugehörige Winkelposition der Trommel erfaßt und der Auswertungseinheit 6 zugeführt.

Durch Auswertung der beiden Messungen in der Auswertungseinheit 6 und durch Differenzbildung für die beiden Winkelmessungen unter Abzug einer vollständigen 360°-Umdrehung der Trommel ist die Auswertungseinheit 6 in der Lage, das Überlappungsmaß ü unmittelbar zu ermitteln und anzuzeigen. Durch Abspeicherung eines Sollwertbereichs für dieses Überlappungsmaß ü und durch Vergleich mit der tatsächlich gemessenen Überlappungslänge läßt sich ein Signal erzeugen, das im Falle einer Abweichung die Schaltstufe 7 ansteuert, die dann die Zuführvorrichtung 2 abschaltet, so daß die Länge für den zuzuführenden Materialstreifen 2 korrigiert werden kann.

Auf der Vorrichtung nach Fig. 4 wurde zunächst ein Karkaßkörper 8 mit seinen unterschiedlichen Bestandteilen auf die Trommel 3 aufgewickelt. Als Materialstreifen 2 wird zum Abschluß ein Laufstreifen aus unvulkanisiertem Kautschuk aufgewickelt, dessen Enden zur Radialrichtung schräggeschnitten sind. Im Normalfall soll die Umfangslänge des Laufstreifens so bemessen sein, daß die schrägen Enden stumpf aneinanderstoßen, d.h. es soll weder eine Überlappung noch eine Lücke vorhanden sein. Nach dem vorstehend beschriebenen Verfahren wird im Beispiel der Fig. 4 mittels der Vorrichtung ermittelt, daß zwischen den Enden des Laufstreifens eine unerlaubte Lücke klafft, so daß über die Schaltstufe 7 die Zuführvorrichtung 1 abgeschaltet wird und die Länge des Laufstreifens korrigiert werden kann.

## Patentansprüche

1. Verfahren zur Messung einer Länge, insbesondere zur Bestimmung der Überlappungslänge (Ü), an einem aufgewickelten Materialstreifen (2), insbesondere Kautschukstreifen, bei dem der Materialstreifen (2) auf einer Trommel (3) aufgewickelt wird,
**dadurch gekennzeichnet,** daß das vordere Ende (A) des Materialstreifens (2) auf der Trommel (3) mittels eines Detektors (5) erfaßt wird und gleichzeitig die zugehörige Winkelstellung der Trommel (3) gemessen wird, daß nach dem Aufwickeln des Materialstreifens (2) sein hinteres Ende (B) von dem Detektor (5) angezeigt und gleichzeitig die dem hinteren Ende (B) zugeordnete Winkelstellung der Trommel (3) gemessen wird und daß schließlich in einer Auswertungseinheit (6) aus dem Differenzwert der Winkelstellungen der Trommel (3) die Länge des Streifens (2) bestimmt wird.

2. Verfahren nach Anspruch 1, dadurch gekennzeichnet, daß aus dem Differenzwert der Winkelstellungen die Überlappungslänge (Ü) bestimmt und angezeigt wird.

3. Verfahren nach Anspruch 1, dadurch gekennzeichnet, daß eine Lücke zwischen den Enden (A,B) des Streifens (2) unmittelbar bestimmt und angezeigt wird.

4. Verfahren nach Anspruch 1, dadurch gekennzeichnet, daß bei einer Abweichung der Streifenlänge von einem Sollwertbereich die Zuführvorrichtung (1) abgeschaltet wird.

5. Vorrichtung zur Messung einer Länge, insbesondere zur Bestimmung der Überlappungslänge (Ü), an einem aufgewickelten Materialstreifen (2), insbesondere Kautschukstreifen, wobei der Materialstreifen (2) auf eine Trommel (3) aufgewickelt wird, gemäß dem Verfahren nach Anspruch 1, enthaltend eine Zuführvorrichtung (1) und die Wickeltrommel (3), dadurch gekennzeichnet, daß die Trommel (3) eine Einrichtung (4) zur Messung der bei der Rotation zurückgelegten Winkel aufweist, daß ein Detektor (5) zur Erfassung von Anfang und Ende eines Materialstreifens (2) dem Außenumfang der Trommel (3) zugeordnet ist und daß eine Auswertungseinheit (6) vorhanden ist, in der die Signale des Detektors (5) und der Winkelmeßeinrichtung (4) erfaßt und ausgewertet werden.

6. Vorrichtung nach Anspruch 5, dadurch gekennzeichnet, daß die Auswertungseinheit (6) eine Anzeigeeinheit enthält.

7. Vorrichtung nach Anspruch 5, dadurch gekennzeichnet, daß der Auswertungseinheit (6) eine Schaltstufe (7) zur Abschaltung der Zuführvorrichtung (1) nachgeschaltet ist.

## Claims

1. Method of measuring a length, more especially for determining the overlapping length (Ü), of a wound-on strip of material (2), more especially a strip of rubber, the strip of material (2) being wound onto a drum (3), characterised in that the front end (A) of the strip of material (2) on the drum (3) is detected by means of a detector (5), and the associated angular position of the drum (3) is simultaneously measured, in that, after the strip of material (2) has been wound-on, its rear end (B) is indicated by the detector (5), and the angular position of the drum (3), associated with the rear end (B), is simultaneously measured, and in that finally the length of the strip (2) is determined in an evaluation unit (6) from the differential value of the angular positions of the drum (3).

2. Method according to claim 1, characterised in that the overlapping length (Ü) is determined from the differential value of the angular positions and indicated.

3. Method according to claim 1, characterised in that a gap between the ends (A, B) of the strip (2) is directly determined and indicated.

4. Method according to claim 1, characterised in that the feed device (1) is switched-off when the length of the strip deviates from a desired value range.

5. Apparatus for measuring a length, more especially for determining the overlapping length (Ü), of a wound-on strip of material (2), more especially a strip of rubber, the strip of material (2) being wound onto a drum (3), in accordance with the method of claim 1, including a feed device (1) and the winding drum (3), characterised in that the drum (3) has a device (4) for measuring the angles covered during the rotational movement, in that a detector (5) for detecting the beginning and end of a strip of material (2) is associated with the external circumference of the drum (3), and in that an evaluation unit (6) is provided, in which the signals of the detector (5) and the angle measuring device (4) are detected and evaluated.

6. Apparatus according to claim 5, characterised in that the evaluation unit (6) includes an indicating unit.

7. Apparatus according to claim 5, characterised in that a switching stage (7) is connected at the output end of the evaluation unit (6) for switching-off the feed device (1).

## Revendications

1. Procédé pour mesurer une longueur, en particulier pour déterminer la longueur de recouvrement (ü) sur une bande de matière (2) enroulée, notamment une bande de caoutchouc, dans lequel la bande de matière (2) est enroulée sur un tambour, caractérisé
par le fait que l'extrémité avant (1) de la bande de matière (2) est détectée sur le tambour (3) au moyen d'un détecteur (5) et que la position angulaire correspondante du tambour (3) est mesurée en même temps, en ce qu'après l'enroulement la bande de matière (2), son extrémité arrière (B) est indiquée par le détecteur (5) et que la position angulaire du tambour (3), qui correspond à l'extrémité arrière (B), est mesurée en même temps, et que, finalement, la longueur de la bande (2) est déterminée dans une unité d'analyse (6), sur la base de la différence des positions angulaires du tambour (3).

2. Procédé selon la revendication 1, caractérisé en ce que la longueur de recouvrement (ü) est déterminée sur la base de la différence des positions angulaires et affichée.

3. Procédé selon la revendication 1, caractérisé en ce qu'un espace vide entre les extrémités (A, B) de la bande (2) est déterminé directement et affiché.

4. Procédé selon la revendication 1, caractérisé en ce qu'en présence d'un écart de la longueur de la bande par rapport à une plage de valeurs de consigne, le dispositif d'amenée (1) est mis à l'arrêt.

5. Dispositif de mesure de longueur, notamment destiné à la détermination de la longueur de recouvrement (ü), d'une bande de matière enroulée (2), notamment d'une bande de caoutchouc, dans le cas où la bande de matière (2) est enroulée sur un tambour (3), correspondant au procédé selon la revendication 1, comprenant un dispositif d'amenée (1) et le tambour d'enroulement (3), caractérisé en ce que le tambour (3) présente un dispositif (4) destiné à la mesure de l'angle parcouru pendant la rotation, en ce qu'un détecteur (5) destiné à détecter le début et la fin d'une bande de matière (2) est associé à la circonférence extérieure du tambour (3) et en ce qu'il est prévu une unité d'analyse (6) dans laquelle les signaux du détecteur (5) et du dispositif de mesure angulaire (4) sont acquis et analysés.

6. Dispositif selon la revendication 5, caractérisé en ce que l'unité d'analyse (6) comprend une unité d'affichage.

7. Dispositif selon la revendication 5, caractérisé en ce qu'un étage de commande (7) destiné à arrêter le dispositif d'amenée (1) est placé en aval de l'unité d'analyse (6).
